# EUROPEAN PATENT SPECIFICATION

(11) **EP 2 860 430 B1**
(45) Date of publication and mention of the grant of the patent: **01.03.2017**
(21) Application number: 14003451.3
(22) Date of filing: 08.10.2014
(51) Int. Cl.: F16L 3/10, B25B 5/06, B25B 5/14

(54) **Clamp for locking pipes and/or cylindrical bodies in general**
Klemme zum Verriegeln von Rohren und/oder zylindrischen Körpern im Allgemeinen
Pince pour verrouillage de tuyaux et/ou de corps cylindriques en général

(30) Priority: 10.10.2013 IT VI20130248
(43) Date of publication of application: 15.04.2015
(73) Proprietor: RITMO S.p.A., 35037 Teolo (Padova) (IT)
(72) Inventor: Bortoli, Renzo, 35038 Torreglia (Padova) (IT)
(74) Representative: Forattini, Amelia

(56) References cited:
- DE-A1- 19 927 281
- FR-A1- 2 564 023
- IT-A1- VI20 110 282

## Description

The present invention relates to a clamp for locking pipes and/or cylindrical bodies in general.

In the field of pipe systems made of plastics, for the transport of fluids, it is known to use welding machines provided with clamps that are adapted to lock the head portions of the cylindrical members being processed.

Such clamps are generally constituted by a pair of mutually opposite jaws provided with substantially semicircular contoured concave portions, which form a locking seat for the cylindrical body being processed.

The jaws, of which only one is fixed to a supporting structure, are articulated by one end and are provided, at the opposite end, with a manual or automated fastening device.

While in stall clamps the movable jaws are handled manually by operators with great ease, as the weight and dimensions of the jaws increase, it is customary to equip those clamps with adapted actuators that assist the operator during the movement of the movable jaw.

However, there are clamps, so to speak, of intermediate size that are not servo-assisted but have jaws which, due to their weight and dimensions, are difficult and dangerous to move manually.

DE19927281 **discloses a clamp made of two semicircular portions hinged together at their first ends and held by a screw bolt at the second ends. One end of the bolt is hinged to one of the ends, and the other end is forked to allow the threaded end of the bolt and the nut to be swung into place. The device is provided with an optional spring that biases the swing of the bolt.**

The aim of the present invention is to provide an improved clamp for locking pipes and/or cylindrical bodies in general in which, although servomechanisms are not present, the movement of the jaws is facilitated.

Within the scope of this aim, a particular object of the invention is to provide a clamp in which the closure of the movable jaw is relatively slowed down.

Another object of the invention is to provide a clamp in which the opening of the movable jaw is not due exclusively to the thrust applied by the operator.

A further object of the invention is to provide a clamp that is particularly safe for the operator and allows to avoid risks of crushing and excessive efforts

Another object of the invention is to provide a clamp that is advantageous both in terms of costs and in terms of reliability.

This aim, these objects and others that will become better apparent hereinafter are achieved by a clamp for locking pipes and cylindrical bodies in general, as claimed in the appended claims.

Further characteristics and advantages will become better apparent from the description of preferred but not exclusive embodiments of a clamp according to the invention, illustrated by way of non-limiting example in the accompanying drawings, wherein:
Figure 1 is a perspective view of a clamp according to the invention in an open configuration;
Figure 2 is a perspective view of the clamp according to the invention in a closed configuration;
Figure 3 is a partially cutout side view of the clamp according to the invention in the open configuration;
Figure 4 is a partially cutout side view of the clamp according to the invention in the closed configuration.

With reference to the cited figures, the clamp according to the invention, generally designated by the reference numeral 1, has a first jaw 10, that can be associated with a supporting structure, and a second jaw 20. An articulation means 30 is interposed between the first and second jaws and is adapted to allow their relative rotation about a tilting axis 100.

By rotating, the jaws can pass from an open configuration, in which the second jaw 20 is angled with respect to the first jaw 10 by an angle greater than or equal to 90°, to a closed configuration, in which the two jaws form together a circular seat for locking pipes and/or cylindrical bodies in general.

The supporting structure, not shown in the figures, consists for example of the frame of a machine for welding pipes and unions made of plastic material.

In this case, the frame carries at least two mutually aligned jaws 1, which can move with respect to each other so as to allow to place in contact the head portions of the pipes to be welded, which are heated beforehand, increasing progressively the contact pressure up to a preset value.

However, the clamp 1 might also be mounted on supporting structures of a different type with respect to the one described, and might be used for other purposes.

In the particular embodiment of the invention, illustrated in the accompanying figures, the articulation means 30 consists of a first pivot 31, which hinges an end of the first jaw 10 to an end of the second jaw 20.

The opposite ends of the jaws have a fastening device 40, of a per se known type.

According to the present invention, the clamp 1 has an elastic means connected to the first jaw 10 and to the second jaw 20 so as to facilitate their opening and/or closure.

The elastic means is constituted by a gas cylinder actuator, designated by the reference numeral 50.

The gas cylinder actuator 50 is compression loaded and is constituted by a piston 51 that can slide hermetically in a jacket 52 that has a substantially cylindrical shape.

The piston 51 is provided with a first end 53 that can be associated with the first jaw 10, while the jacket 52 has a second end 54 that can be associated with the second jaw 20.

In detail, the first end 53 is hinged to the first jaw 10 about a first rotation axis 110, which is parallel and spaced with respect to the tilting axis 100, and the second end 54 is pivoted to the second jaw 20 about a second rotation axis 120, which is parallel and spaced with respect to the tilting axis 100 and the first rotation axis 110.

The two rotation axes 110 and 120 are defined respectively by a second pivot 55, which is fixed to the first jaw 10, and by a third pivot 56, which is fixed to the second jaw 20.

Advantageously, the pivots are arranged so as to allow the gas cylinder actuator 50 to produce a reaction force that generates a torque that facilitates the opening rotation of the second jaw 20.

In the particular embodiment of the invention shown in the accompanying figures, for example, when the clamp 1 is fastened the gas cylinder actuator 50 is angled with respect to the horizontal plane by an angle of approximately 67°.

It is preferable to set the value of the moment generated by the gas cylinder actuator 50, which depends on the characteristics of the gas cylinder actuator and on the position of the rotation axes 110 and 120, so that the moment establishes, in the closed configuration, a condition of stable equilibrium between the torque applied by the weight of the second jaw 20 and the torque applied by the gas cylinder actuator 50.

However, alternative embodiments of the invention are not excluded in which the gas cylinder actuator 50 has a different placement and/or reaction force, making it necessary to maintain the closed configuration by virtue of the fastening device 40.

Advantageously, the gas cylinder actuator 50 is arranged within an adapted cavity provided in the clamp 1 so that the actuator remains within the overall dimensions of the jaws.

More particularly, the cavity is provided between a pair of locking members 21 that form the second jaw 20.

Each jaw is in fact constituted by a pair of locking members, designated respectively by the reference numerals 11 and 21, obtained from a metallic plate.

The locking members 11 and 21 are provided with circular arc-like lateral edges, designated respectively by 12 and 22, which are shaped with a same curvature arc.

The locking members 11 and 21 of each jaw are mutually parallel and are fixed by virtue of spacers, designated by 13 and 23, positioned so that the centers of the lateral edges 12 and 22 are arranged on a same axis.

The operation of the clamp according to the invention is as follows.

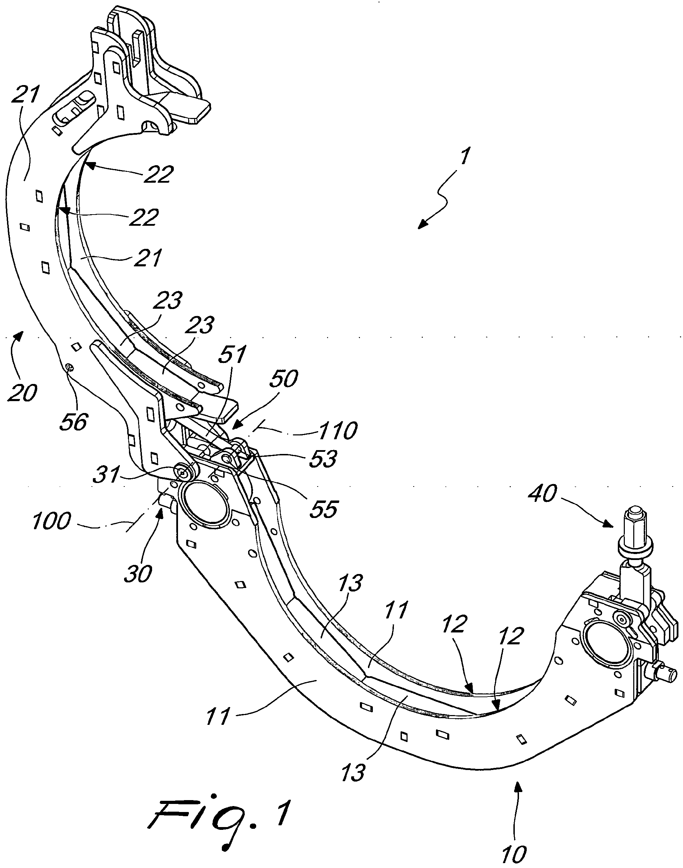

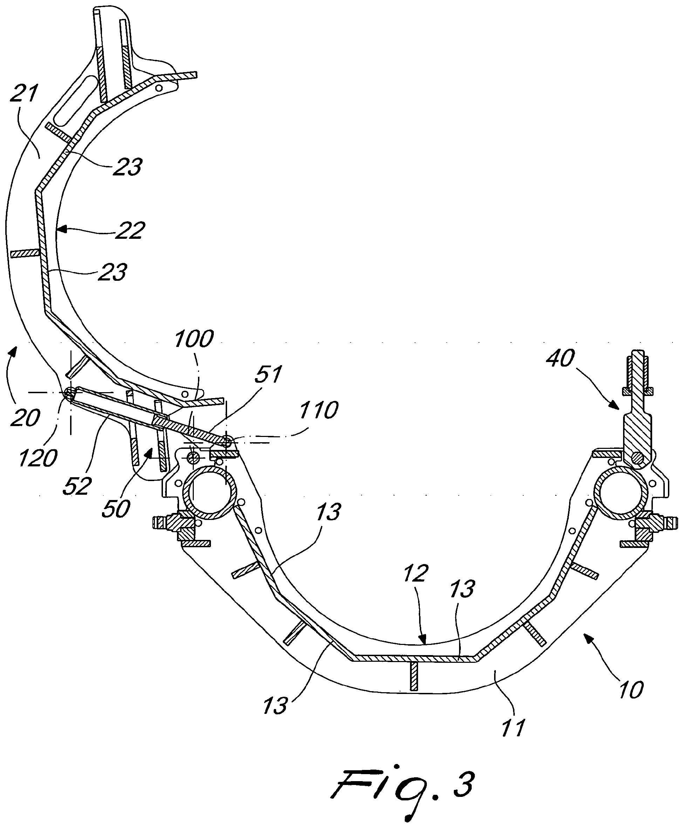

Starting for example from an open configuration of the clamp 1, shown in Figures 1 and 3, the gas cylinder actuator 50 determines, as a consequence of the actuation of the second jaw 20 by an operator, a relatively slowed closure rotation of the second jaw 20 until a fully closed configuration of the clamp 1 is reached.

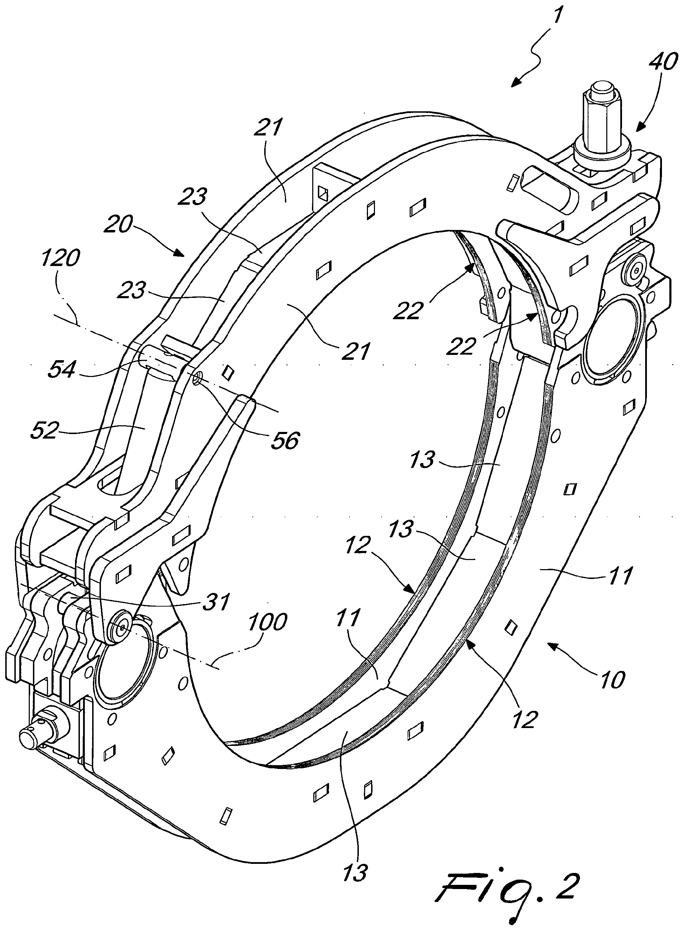

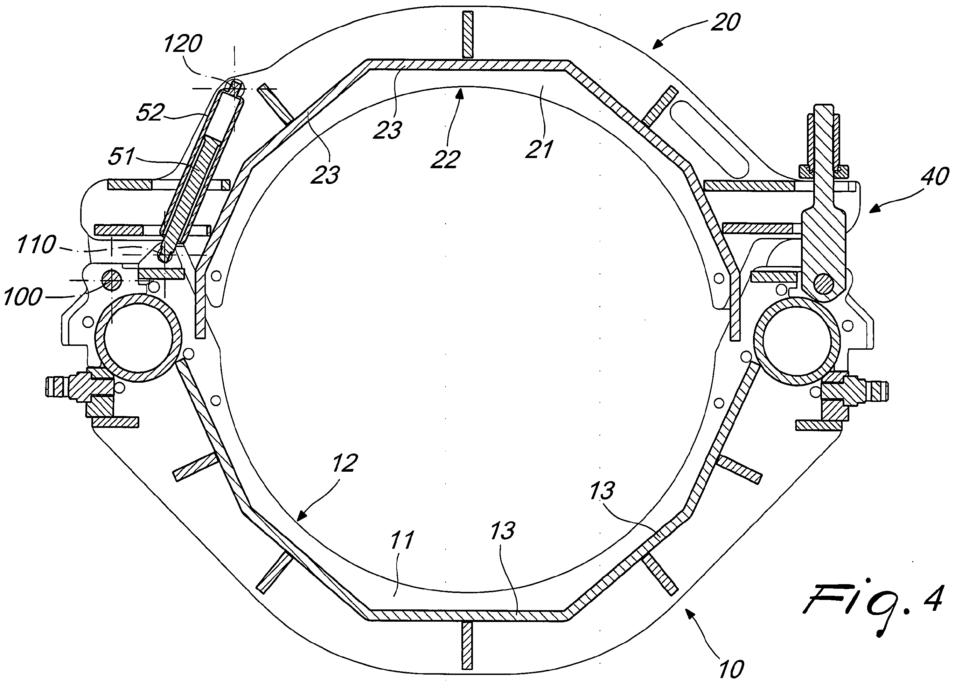

The second jaw 20, under the combined action of its own weight, which facilitates its descent, and the braking action due to a force moment applied by the gas cylinder actuator 50, completes its closing step with gradual rotation about the oscillation axis 100 to the position shown in Figures 2 and 4.

As a function of the intensity of the moment generated by the gas cylinder actuator 50, which depends on the characteristics of gas cylinder actuator and on the position of the rotation axes 110 and 120, it is possible to establish a stable equilibrium condition between the torque applied by the weight of the second jaw 20 and the torque applied by the gas cylinder actuator 50.

The closed configuration is maintained by means of the fastening device 40.

The fastening device 40 is used to completely close the clamp 1 and lock the members inserted therein.

Upon the opening of the clamp 1, the operator follows the second jaw 20 in rotation about the oscillation axis 100, while the gas cylinder actuator 50 applies a thrust force that tends to make the piston 51 exit from the jacket 52 and pushes the second jaw 20, facilitating its opening.

Once the open configuration has been reached, if the second jaw 20 is angled with respect to the first jaw 10 by an angle of approximately 90°, or is in a substantially vertical position, the force of the gas cylinder actuator 50 is such as to support the weight of the second jaw 20 and keep it open.

The advantages of the clamp thus constructed are numerous and significant.

The clamp according to the present invention in fact allows the operator to handle the movable jaw 20 easily and safely.

This capability mainly stems from the fact that, in the clamp 1, the opening movement of the movable jaw 20 is facilitated by the pushing action applied by the gas cylinder actuator 50, which also slows its descent during closure.

Also, the clamp 1 allows to reduce considerably or even eliminate the risks of crushing for the operator.

It should also be noted that the clamp 1 is very reliable and advantageous from a purely economic standpoint.

It has been found, therefore, that the improved clamp for locking pipes and/or cylindrical bodies in general according to the invention achieves fully the intended aim and objects.

In practice, the materials used, so long as they are compatible with the specific use, as well as the contingent shapes and dimensions, may be any according to the requirements and the state of the art.

## Claims

1. A clamp for locking pipes and cylindrical bodies in general, comprising at least one first jaw **(10)** that is associatable with a supporting structure, a second jaw **(20),** and an articulation means **(30)** interposed between said first jaw **(10)** and said second jaw **(20);** said articulation means **(30)** being configured to allow the relative rotation of said two jaws **(10, 20)** about a tilting axis **(100),** between an open configuration and a closed configuration in which said two jaws **(10, 20)** form a substantially circular locking seat; said clamp **further comprising** an elastic means **(50)** that is functionally connected to said two jaws **(10, 20)** and is adapted to facilitate their opening and/or closure; said elastic means **(50)** being arranged so as to produce an elastic reaction that generates a torque that facilitates the opening rotation of said second jaw **(20); said clamp being characterized in that said elastic means comprises at least one gas cylinder actuator (50) that is provided with a first end (53) that is associatable with said first jaw (10) and with a second end (54) that is associatable with said second jaw (20);** said closed configuration being maintained by a condition of stable equilibrium between the torque exerted by the weight of said second jaw (20) and the torque exerted by said **gas cylinder actuator (50).**

2. The clamp according to claim 1, **characterized in that** said gas cylinder actuator **(50)** is compression-loaded.

3. The clamp according to one or more of the preceding claims, **characterized in that** it comprises a fastening device **(40),** associated with said jaws **(10, 20),** and adapted to maintain said closed configuration.

4. The clamp according to claim **1, characterized in that** said first end **(53)** is hinged to said first jaw **(10)** about a first rotation axis **(110)** that is parallel and spaced with respect to said tilting axis **(100).**

5. The clamp according to claim **1, characterized in that** said second end **(54)** is hinged to said second jaw **(20)** about a second rotation axis **(120)** that is parallel and spaced with respect to said tilting axis **(100)** and said first rotation axis **(110).**

6. The clamp according to one or more of the preceding claims, **characterized in that** it comprises a cavity that accommodates said elastic means **(50);** said cavity being configured in order to keep said elastic means **(50)** within the overall volume of said jaws **(10, 20).**

7. The clamp according to claim **6**, **characterized in that** each jaw **(10, 20)** comprises a pair of locking members **(11, 21)** obtained from a metallic plate and arranged mutually parallel; said locking members **(11, 21)** having circular arc-shaped lateral edges **(12, 22)** according to a same curvature arc and being arranged so that the corresponding centers of curvature are arranged on a same axis; said locking members **(11, 21)** being mutually joined and spaced by fixing members **(13, 23);** said cavity being formed between said locking members **(11, 21).**

## Patentansprüche

1. Eine Klemme zum Verriegeln von Rohren und zylindrischen Körpern im Allgemeinen, die mindestens eine erste Klaue (10) umfasst, welche mit einer tragenden Struktur verbunden werden kann, eine zweite Klaue (20) und ein Gelenkmittel (30), angeordnet zwischen der ersten Klaue (10) und der zweiten Klaue (20); wobei das Gelenkmittel (30) ausgebildet ist, um die Relativdrehung der beiden Klauen (10, 20) um eine Kippachse (100) zu ermöglichen, zwischen einer offenen Anordnung und einer geschlossenen Anordnung, in welcher die beiden Klauen (10, 20) einen im Wesentlichen kreisförmigen Klemmsitz bilden, wobei die Klemme weiter ein elastisches Mittel (50) umfasst, das funktionell mit den beiden Klauen (10, 20) verbunden und geeignet ist, ihr Öffnen und/oder Schließen zu erleichtern; wobei das elastische Mittel (50) angeordnet ist, um eine elastische Reaktion zu erzeugen, die ein Drehmoment erzeugt, welches die Öffnungsdrehung der zweiten Klaue (20) erleichtert; wobei die Klemme **dadurch gekennzeichnet ist, dass** das elastische Mittel mindestens ein Gaszylincier-Bedienelement (50) umfasst, das mit einem ersten Ende (53) versehen ist, welches mit der ersten Klaue (10) verbunden werden kann, und mit einem zweiten Ende (54), das mit der zweiten Klaue (20) verbunden werden kann; wobei die geschlossene Anordnung aufrechterhalten wird durch einen Zustand stabilen Gleichgewichts zwischen dem Drehmoment, das durch das Gewicht der zweiten Klaue (20) ausgeübt wird, und dem Drehmoment, das durch das Gasaylinder-Hedienelement (50) ausgeübt wird.

2. Die Klemme gemäß Anspruch 1, **dadurch gekennzeichnet, dass** das Gaszylinder-Bedienelement (50) druckbelastet ist.

3. Die Klemme gemäß einem oder mehreren der obigen Ansprüche, **dadurch gekennzeichnet, dass** sie eine Befestigungsvorrichtung (40) umfasst, verbunden mit den Klauen (10, 20) und ausgebildet, um die geschlossene Anordnung beizubehalten.

4. Die Klemme gemäß Anspruch 1, **dadurch gekennzeichnet, dass** das erste Ende (53) gelenkig mit der ersten Klaue (10) verbunden ist um eine erste Drehachse (110), die parallel zu der Kippachse (100) und von ihr beabstandet ist.

5. Die Klemme gemäß Anspruch 1, **dadurch gekennzeichnet, dass** das zweite Ende (54) gelenkig mit der zweiten Klaue (20) verbunden ist um eine zweite Drehachse (120), die parallel zu der Kippachse (100) und der ersten Drehachse (110) und davon beabstandet ist.

6. Die Klemme gemäß einem oder mehreren der obigen Ansprüche, **dadurch gekennzeichnet, dass** sie einen Hohlraum umfasst, der das elastische Mittel (50) aufnimmt; wobei der Hohlraum ausgebildet ist, um das elastische Mittel (50) innerhalb des Gesamtvolumens der Klauen (10, 20) zu halten.

7. Die Klemme gemäß Anspruch 6, **dadurch gekennzeichnet, dass** jede Klaue (10, 20) ein Paar von Verriegelungsgliedern (11, 21) umfasst, hergestellt aus einer Metallplatte und parallel zueinander angeordnet; wobei die Verriegelungsglieder (11, 21) kreisbogenförmige Seitenkanten (12, 22) entlang eines selben Krümmungsbogens haben und so angeordnet sind, dass die jeweiligen Krümmungsmittelpunkte auf einer selben Achse angeordnet sind; wobei die Verriegelungsglieder (11, 21) durch Befestigungsglieder (13, 23) miteinander verbunden und beabstandet sind; wobei der Hohlraum zwischen den Verriegelungsgliedern (11, 21) geformt ist.

## Revendications

1. Pince pour bloquer des tuyaux et des corps cylindriques en général, comprenant au moins une première mâchoire (10) qui peut être associée à une structure de support, une seconde mâchoire (20) et un moyen d'articulation (30) intercalé entre ladite première mâchoire (10) et ladite seconde mâchoire (20); ledit moyen d'articulation (30) étant configuré pour permettre la rotation relative desdites deux mâchoires (10, 20) sur un axe de pivot (100) entre une configuration ouverte et une configuration fermée dans laquelle les deux mâchoires (10, 20) forment un siège de verrouillage essentiellement circulaire; ladite pince comprenant en outre un moyen élastique (50) qui est relié de façon fonctionnelle auxdites deux mâchoires (10, 20) et est adapté pour faciliter leur ouverture et/ou leur fermeture; ledit moyen élastique (50) étant agencé de façon à produire une réaction élastique qui génère un couple qui facilite la rotation d'ouverture de la seconde mâchoire (20); ladite pince étant **caractérisée en ce que** ledit moyen élastique comprend au moins un déclencheur à cylindre à gaz (50) qui doté d'une première extrémité (53) qui peut être associée à ladite première mâchoire (10) et d'une seconde extrémité (54) qui peut être associée à ladite seconde mâchoire (20); ladite configuration fermée étant maintenue par un état d'équilibre stable entre le couple exercé par le poids de ladite seconde mâchoire (20) et le couple exercé par ledit déclencheur à cylindre à gaz (50).

2. Pince selon la revendication 1, **caractérisée en ce que** ledit déclencheur à cylindre à gaz (50) est contraint par compression.

3. Pince selon l'une ou plusieurs des revendications précédentes, **caractérisée en ce qu'**elle comprend un dispositif de fixation (40) associé auxdites mâchoires (10, 20), et adapté pour maintenir ladite configuration fermée.

4. Pince selon la revendication 1, **caractérisée en ce que** ladite première extrémité (53) est articulée sur ladite prezniére mâchoire (10) sur un premier axe de rotation (110) qui est parallèle et espacé par rapport audit axe de pivot (100).

5. Pince selon la revendication 1, **caractérisée en ce que** ladite seconde extrémité (54) est articulée sur ladite seconde mâchoire (20) sur un second axe de rotation (120) qui est parallèle et espacé par rapport audit axe de pivot (100) et audit premier axe de rotation (110).

6. Pince selon l'une ou plusieurs des revendications précédentes, **caractérisée en ce qu'**elle comprend une cavité qui reçoit ledit moyen élastique (50); ladite cavité étant configurée afin de maintenir ledit moyen élastique (50) à l'intérieur du volume global desdites mâchoires (10, 20).

7. Pince selon la revendication 6, **caractérisée en ce que** chaque mâchoire (10, 20) comprend une paire d'éléments de verrouillage (11, 21) obtenus à partir d'une plaque métallique et agencés mutuellement parallèlement; lesdits éléments de verrouillage (11, 21) ayant des bords latéraux circulaires arqués (12, 22) selon un même arc de courbure et étant agencés de façon à ce que les centres correspondants de courbure soient agencés sur une même axe; lesdits éléments de verrouillage (11, 21) étant joints et espacés mutuellement par des éléments de fixation (13, 23); ladite cavité étant formée entre lesdits éléments de verrouillage (11, 21).
